# EUROPEAN PATENT SPECIFICATION

(11) **EP 4 539 956 B1**
(45) Date of publication and mention of the grant of the patent: **15.04.2026**
(21) Application number: 23733307.5
(22) Date of filing: 16.06.2023
(51) Int. Cl.: B01D 35/04, B01D 35/153, B01D 37/04, B01D 35/30

(54) **A SANITARY FILTER DEVICE**
SANITÄRE FILTERVORRICHTUNG
DISPOSITIF DE FILTRE SANITAIRE

(30) Priority: 17.06.2022 EP 22179634
(43) Date of publication of application: 23.04.2025
(73) Proprietor: T-Safe A/S, 3450 Allerød (DK)
(72) Inventor: TANDRUP, Anders Johannes Lebrinne, 3450 Allerød (DK); JENSEN, Henrik Mogens, 3450 Allerød (DK)
(74) Representative: Inspicos P/S
(86) International application number: PCT/EP2023/066223
(87) International publication number: WO 2023/242397

(56) References cited:
- WO-A2-2009/033048
- US-A- 4 359 384
- US-A- 4 504 389
- US-A- 4 686 037
- US-A1- 2002 134 714
- US-A1- 2003 116 495
- US-B1- 9 109 721

## Description

The present disclosure relates to a sanitary filter device for mounting on a water outlet comprising a connector unit and a filter unit, to a sanitary installation comprising the sanitary filter, and to a method for filtration of water.

### BACKGROUND ART

Sanitary filter devices as a whole or built-in parts of such sanitary filter devices must be replaced from time to time due to clogging by bacteria, biofilm, dirt and/or calcification and also for hygienic reasons. The sanitary filter devices are normally mounted on a water tap or faucet which is connected to a water pipe.

Water in pipes in plumbing systems, for example in a residence, an apartment building, hospital, an office or other building, may become unsuitable for consumption or use by a user of the water, such as an inhabitant of the building or patient in the hospital. For example, scale or rust formed in the pipes may become suspended by the water which may lead to discoloration of the water, rendering the water less attractive to use. A greater problem, however, is that harmful bacteria growing on the in-side of the pipes may release from the pipes to be suspended by the water, potentially causing disease among the users of the water.

Although water pipes may be cleaned, for example by flushing, such cleaning is often inefficient as bacteria in the water typically grow to form a biofilm adhering strongly to, and covering large areas of, the pipe interior.

Harmful pathogens within the biofilm include bacteria of the Legionella genus which cause Legionellosis in the form of pneumonia (Legionnaires' disease) and other respiratory illnesses (Pontiac fever). The bacteria Legionella pneumophila is responsible for over 90% of the Legionellosis cases, and 90% of the Legionella bacteria in the pipe is found within the biofilm.

Other contaminants in the water include the parasites Giardia lamblia and Cryptosporidum and the bacteria Mycobacterium Avium.

Although water pipes may be cleaned, such cleaning is often inefficient as bacteria in the water typically grow to form a biofilm adhering strongly to, and covering large areas of, the pipe interior, thus, sanitary filters are applied to prevent or reduce the risk of infections caused by microorganism and bacteria.

The Sanitary filter is a mechanical filter, holding back substantially all particles and organisms suspended in the water larger than the filter pore size.

Sanitary filters are usually located in a housing that can be screwed into and out of an outlet fitting, engagement points for a tool being provided on the housing.

In order to avoid unauthorized removal of the filter, special tools and corresponding tool attachment points are often provided on the sanitary filter or its housing.

Although this makes unauthorized removal more difficult, it also requires special tools and the appropriate knowledge of the personnel when replacing the sanitary filter. The effort in terms of specialist staff and the tool is correspondingly large.

An additional challenge is the widespread use of sensor operated taps for non-touch use. When using these in an environment with waterborne contaminants it is important to avoid the sensor tap opens for the contaminated water during or while the sanitary filter temporarily is removed. Thus, the additional requirement of a stop-valve function is in focus for these sensor-tap users.

In facilities where a large number of such sanitary filters are installed, such as hospitals, hotels, clinics, the frequent maintenance that may be required or also desired is therefore quite cost-intensive overall.

Filters for water taps are e.g. disclosed in CN109896649 A and GB 2472609 A.

Prior art document US 2002/134714 discloses a water purifier composed of a valve main body and a filtration portion, which are coupled to each other in an attachable and detachable manner at the main body side coupling portion and the filtration portion side coupling portion. Consequently, the water purifier filtration portion can be connected to the water purifier main body in a single step with ease in a secure manner, and at the same time, the water purifier filtration portion will not fall off easily even when water with a high water pressure flows in.

US 4,359,384 discloses a lever actuated valve stem for control of liquid flow through a filtering device. The device is connectable to a source of impure liquids and includes a filter disposed between the inlet and the outlet of the device for the removal of the impurities. The valve stem is operable to direct fluid flow through the filter or to bypass the filter.

US 4,686,037 discloses a water filter having an elongated base with an inlet opening near one end thereof to which is secured an adaptor ring for attachment to a water faucet. A first outlet opening on the base dispenses unfiltered water and there is a channel defined within the base that leads toward the other end, with an externally-operable valve being included for selecting between unfiltered flow to that outlet and flow down the channel. Located near the other end of the base is a mounting on which sits a water filter cartridge that communicates with the channel, and the cartridge delivers filtered water to a second outlet.

### DESCRITION OF THE DISCLOSURE

An object of the present disclosure is to provide a sanitary filter device, in which the filter part can be quick and easy replaced.

It is also an object to provide a sanitary filter device with a high degree of hygiene.

In a first aspect, the present disclosure relates to a sanitary filter device for mounting on a water outlet, such as a tap or faucet, where the filter device comprises a connector unit and a filter unit, and where the connector unit is adapted for releasably connection with the water outlet at a first end and connection with the filter unit at a second end opposite the first end, the second end including a coupling for coupling or uncoupling the filter unit with the connector unit, where the coupling is integrated in the connector unit. The filter unit comprises a housing encapsulating an internal filter portion, the housing including at an upper end a connector portion for connection with the connector unit, where the connector portion includes an opening adapted for inlet of water to the filter portion, and the housing at a lower end opposite the upper end includes an outlet portion with an opening for filtered water and wherein the housing is sealed such that the filter portion communicates with the exterior via the inlet opening adapted for inlet of water and the opening for filtered water. A filter axis extends through the first and second end of the connector unit and through the opening adapted for inlet of water and the opening for filtered water.

The upper and lower ends are defined in respect to the tap position. Thus, the upper end is closer to the water outlet of the tap than the lower end, when the sanitary filter device is mounted on a water outlet of the water tap.

By providing a filter axis extending through the first and second end of the connector and through the opening adapted for inlet of water and the opening for filtered water it is ensured that the water outlet of the water tap and the filter unit at least partly overlap along the filter axis, when the filter device is mounted at the water tap. This may reduce pressure loss over the filter device. In one embodiment, the filter axis may be a centre axis extending centrally through both the water outlet, the connector unit, and the filter unit.

In an embodiment of the sanitary filter device, the filter unit is substantially cylindrical with an upper end including the connector portion and a lower end including the outlet portion. The cylindrical shape provides good fitting with taps.

The sanitary filter device is configured for mounting on a water outlet via the connector unit, where the connector unit is adapted for connection with the water outlet at a first end. To facilitate easy mounting of the sanitary filter device, the connector unit may comprise a threading configured for engagement with a corresponding threading of the water tap. The threading of the connector unit may be an outer threading configured to engagement of an inner threading of the water tap. In an alternative embodiment, an outer threading may be formed at the connector unit. The provision of corresponding treading on the water tap and the connector unit may further allow the sanitary filter device to be releasably mounted on the water tap.

The housing is sealed, and it is as such not possible to open the housing and replace the internal filter portion. The reason why the filter portion is not replaceable is due to hygiene, and also due to the need for easy replacement of the filter unit. Then, in the sanitary filter device, the housing is sealed, and it is not possible to replace the internal filter portion without destructive actions on the housing, and in an embodiment the housing is sealed by welding, gluing and/or other ways of permanent attachment.

The internal filter portion may comprise a membrane which as an example may comprise poly-sulfone hollow fibres. Other types of membranes may also be used. To provide a membrane of sterilizing grade type, the pore sizes of the membrane may be up to 0.1 µm. The hollow fibres may be fixated by a potting material which may be capable of separating the contaminated water from the filtered water.

To further allow the possibility of removing e.g., larger sediments or flakes before filtering the water by a sterilizing grade filter, different pre-filter solutions may be added. Additionally, or alternatively, active carbon elements may be included to allow removable of chlorine, chloramine etc. The materials need to be drinking water approved, if the filter is to be used at a water tap which may be used for drinking water.

By increasing the amount of filter material, the lifetime of the filter unit may be increased, as the lifetime of the filter unit may substantially be proportional with the amount of filter material. The amount of filter material and/or the pore size of the membrane may further impact the flow of water through the filter.

The sanitary filter device includes a coupling in the connector unit and a connector portion in the housing, and in an embodiment the connector portion comprises a recess for engagement with the coupling. The coupling preferably includes a protrusion or brace adapted for engagement with the recess in the connector portion.

The connector unit preferably comprises an activator, such as a button, linked with the coupling for coupling or uncoupling the filter unit with the connector unit. The coupling may in an embodiment include a spring, and by pushing the button, the coupling may compress the spring and bring the coupling in release-mode where the connector portion and the filter unit can be removed or un-coupled from the connector unit. In this manner, a used filter unit can be easily replaced by a new filter unit. When the connector portion of the new filter unit is placed in the connector unit the button may be released such that the coupling engages with the connector portion and lock the filter unit to the connector unit. The filter unit may as an example be replaced every month, every second month, every third month, or less often. The replacement may take place in accordance with a predetermined time schedule which may e.g., depend on the type of building in which the sanitary filter device is used, and/or may depend on the quality of the water.

Although the connector unit may be manufactured from several different materials, such as plastic or polymer materials, the main core element of the connector unit is preferably manufactured from metallic material selected from e.g., bras, copper, iron, steel and the metallic material may be chromium plated. Metallic materials are very suitable for use in water supply systems as they are durable and resist cleaning processes such as decalcification or cleaning by sterilizing chemical solutions based on alcohols or hydrogenperoxide active ingredients.

The housing includes the filter portion and in an embodiment the housing is manufactured from plastic material selected from POM, ABS, PE, PP, PA, PS, PVC, PVA, PTFE, PET, PMMA, PLA, PC, MBS, Polyester or similar materials. The plastic material is easy workable and can be shaped to any desired shape. Moreover, it is also easy to seal the two parts together.

In an embodiment of the sanitary filter device, the outlet portion on the filter unit comprises a biocide. The biocide may be a chemical substance, e.g., Ag ions, which may be integrated in the material of the outlet portion and serve to eliminate or reduce bacteria growth on the filter components inside or outside, thereby reducing the risk of transfer of pathogen bacteria. As an example, the biocide may be mixed with a plastic material before manufacturing the outlet portion to thereby form an outlet portion comprising a biocide. Colour, e.g., in the form of powder, may additionally or alternatively be mixed with the plastic material to form a coloured outlet portion which may comprise a biocide.

The sanitary filter device according to disclosure also includes embodiments wherein the housing portion comprises means for visual control and identification, such as a colour, a pattern, a number, a text, a barcode, a QR code, and/or a data matrix code. The means for visual control and identification may e.g., serve to ensure product traceability and that the filter unit is replaced in due time.

In an embodiment, the opening for filtered water in the outlet portion is encircled by a protrusion. By application of a protrusion, the opening can be protected, as the free end of the protrusion may extend beyond the opening. The protrusion may consequently serve to enhance the hygiene because the protrusion will reduce the risk for physical contact, such as touch by hand, with the opening for water, thereby reduce the risk for retrograde bacterial contamination. The protrusion may as an example extend in the range of 1-5 mm from the opening for filtered water.

The sanitary filter device may further comprise an outflow member arranged at the opening for filtered water. As an example, the outflow member may be inserted at least partly into the opening. The outflow member may at least partly obstruct the opening for filtered water to thereby change the flow of filtered water compared to an embodiment without an outflow member. In one embodiment, the outflow member may comprise a plurality of smaller openings to provide a spray flow. In an alternative embodiment, the outflow member may comprise a plurality of radially extending members transverse to the flow direction in a substantially mill wheel shape. This may provide a substantially laminar flow of filtered water. Other types of outflow members may also be applicable.

In an embodiment, the coupling for coupling or uncoupling the filter unit with the connector unit is adapted to indicate during mounting of the filter unit that the filter unit is proper connected with the connector unit, e.g., by emitting a sound or displaying a visual physical or colour indicator.

The sanitary filter device according to the disclosure may include an embodiment where the connector portion includes a check-valve. Thus, undesired backflow of water can be prevented. This serves both while in use to close off any return flow of concentrated filtrate back into the utility supply of water, but also to close off any return flow of concentrated filtrate avoiding spill on staff while handling and replacing the filters - thereby reducing this hazard.

In an embodiment of the sanitary filter device, the connector unit comprises a flow regulator, to control the flow of water. This reduces the water consumption and thus indirectly also improve the useable time of the filter product.

In an embodiment of the sanitary filter device, there is a connector unit with a built-in stop-valve, where the stop-valve part is comprised of a piston, e.g., made from polymer material, and comprising an O-ring for sealing the water outlet in the connector device when the piston is in closed position. The piston is guided in place by a spring - ensuring it is closed when no filter unit is present. The piston is pushed open by the connector on the filter unit when the filter unit is mounted in the connector unit.

The piston preferably has a length and a top part at an upper end and a bottom part at its lower end. The length of the piston serves to guide the piston in the filter device. The top part preferably includes an O-ring and is shaped to close the water outlet in the connector unit. From the bottom part and upwards towards the top part, the piston may at least along a part of the length towards the top part have a cross-section with recesses or x-shape to allow better water flow when the piston is in an open position in the filter unit.

In an embodiment of the sanitary filter device, the connector is designed to avoid unintentional tampering, unintentional removal of the filter unit, and/or unintentional unscrewing the connector from a tap. This may be achieved by adding a locking pawl and adding an outer ring to the periphery of the connector. An activation tool may be used to activate the locking pawl to thereby release the filter unit. Unintentional unscrewing the connector from a tap may as an example be achieved by adding a coupler/a watertight union in a top part of the connector. If a user tries to unscrew the connector from the tap, the coupler/union may ensure that the connector unit simply swivel around without allowing the user to dismount it from the tap by hand.

The present disclosure provides a sanitary filter device which is easy and hygienic to use in practice due to the application of the connector unit in durable material, such as brass or other metal, and the filter unit manufactured in plastic or polymer material. The filter unit is the replaceable part of the device.

In a second aspect, the disclosure provides a sanitary installation comprising a water tap for supply of water and a sanitary filter device according to the first aspect, wherein the sanitary filter device is mounted on a water outlet of the water tap, and wherein the opening for filtered water is in constant open communication with a surrounding space.

By providing the opening for filtered water in constant open communication with the surrounding space, only a single opening/closing mechanism is needed, as opening, and closing of the water tap may allow water to flow through the sanitary filter device to thereby filter water before use. Thus. A separate opening/closing structure for the sanitary filter device may be omitted.

It should be understood, that a skilled person would readily recognise that any feature described in combination with the first aspect of the disclosure could also be combined with the second aspect of the disclosure, and vice versa.

The sanitary filter device according to the first aspect of the disclosure is very suitable for the sanitary installation according to the second aspect of the disclosure. The remarks set forth above in relation to the sanitary filter device are therefore equally applicable in relation to the sanitary installation.

In a third aspect, the disclosure provides a method for filtration of water by use of the sanitary installation according to the second aspect, the method comprising the steps of:
- opening a flow of water,
- allowing the water to pass the filter unit, and
- closing the flow of water,

wherein the steps of opening and closing the flow of water is carried at the water tap, and
wherein the water flow passes the filter unit after opening the water flow.

It should be understood, that a skilled person would readily recognise that any feature described in combination with the first and second aspects of the disclosure could also be combined with the third aspect of the disclosure, and vice versa.

The sanitary filter device and the sanitary installation according to the first and second aspects of the disclosure are very suitable for performing the method steps according to the third aspect of the disclosure. The remarks set forth above in relation to the sanitary filter device and the sanitary installation are therefore equally applicable in relation to the method.

### DETAILED DESCRIPTION OF THE DRAWINGS

The disclosure will now be described in further details with reference to drawings in which:
- Figure 1:: illustrates an embodiment of the sanitary filter device;
- Figure 2:: illustrates the sanitary filter device of fig. 1 from below;
- Figures 3A-B:: illustrate removal and mounting of the filter unit;
- Figure 4:: is a cross-section of the sanitary filter device;
- Figure 5:: is a cross-section of the connector unit;
- Figures 6A-E:: illustrate embodiments of the outlet portion;
- Figure 7:: illustrates the connector unit piston connected to the filter device;
- Figure 8:: illustrates the connector unit with piston;
- Figures 9A-B:: illustrate embodiments of the sanitary filter device;
- Figures 10A-B:: illustrate embodiments of the connector unit;
- Figure 11:: illustrates the connector unit from below; and
- Figures 12A-B: illustrate use of an activation tool for release of a filter unit.

The figures are only intended to illustrate the principles of the disclosure and may not be accurate in every detail. Moreover, parts which do not form part of the disclosure may be omitted. The same reference numbers are used for the same parts.

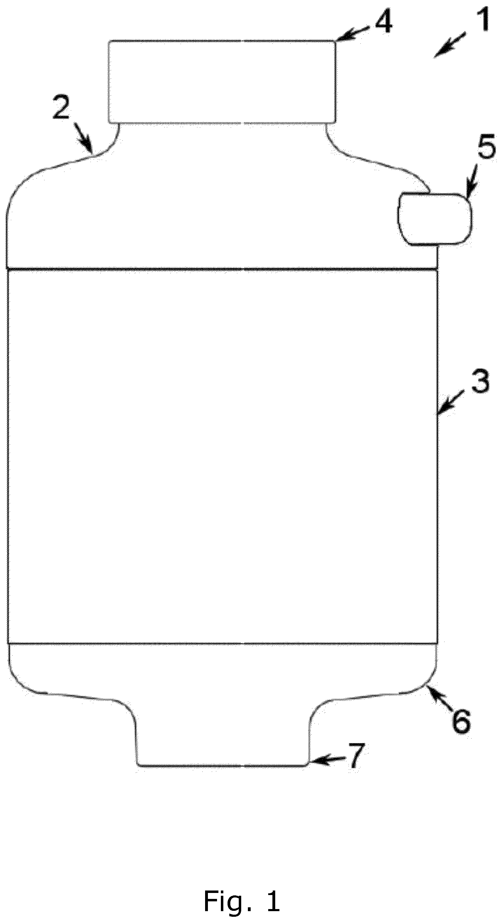

Figure 1 shows the sanitary filter device 1 in a side view with the parts which are visible when the filter device is mounted on a water tap (not shown) and in use. The sanitary filter device comprises the connector unit 2 and the filter unit 3. The connector unit 2 is seen with a coupling nut 4 for connection with a water tap and a button 5 which can be pushed to release the filter unit 3.

The filter unit 3, which encapsulates the filter which may comprise a plurality of hollow fibres, is substantially cylindrical with an outlet portion 6 at the bottom part which at its lower part includes an opening 7 for filtered water.

The diameter of the filter unit 3 may be in the range of 35-60 mm. The height of the filter unit 3 may likewise be in the range of 35-60 mm. When exchanging the filter unit 3 with a filter unit 3 have a larger height and/or a larger diameter, it may be possible to increase the filter capacity.

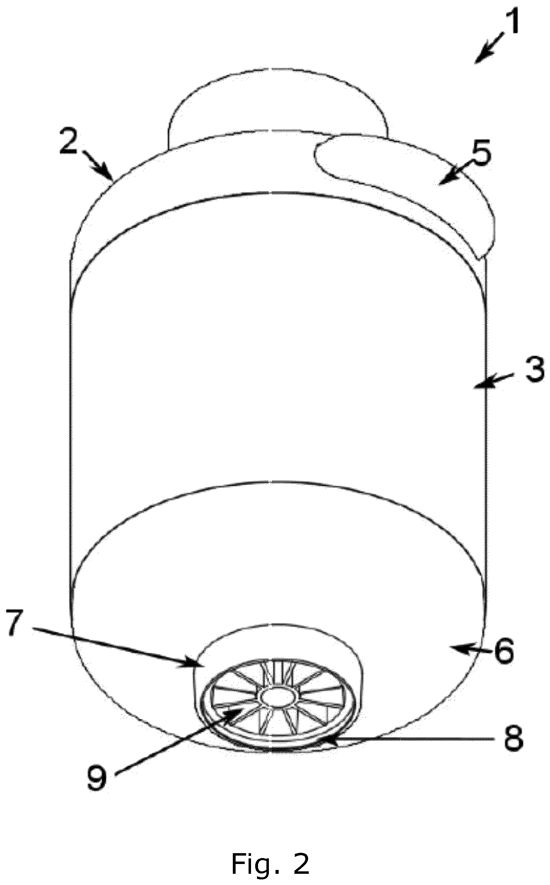

Figure 2 shows the sanitary filter device 1 from the bottom. From this angle, the opening 7 for filtered water in the filter unit 3 can be seen in in more details. The opening 7 includes an outflow member 9 for the water flow and a protrusion 8 forming a protective ring around the outflow member. The protective ring 8 serves to prevent touching of the outflow member 9 which may lead to retrograde contamination with bacteria. In this embodiment the outflow member is configured to provide a laminar flow of filtered water. The laminar flow is in the illustrated embodiment provided by an outflow member in the form of a mill wheel partly covering the opening 7 for filtered water to thereby provide the laminar flow. Other shapes of the outflow member are possible.

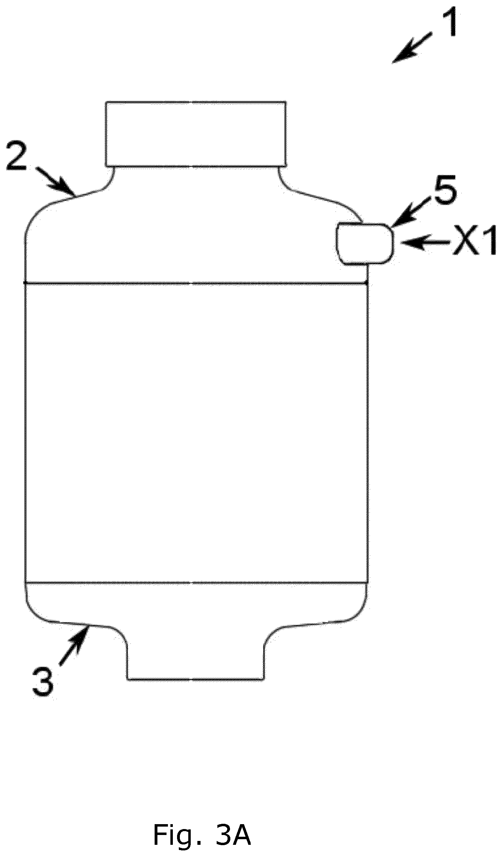

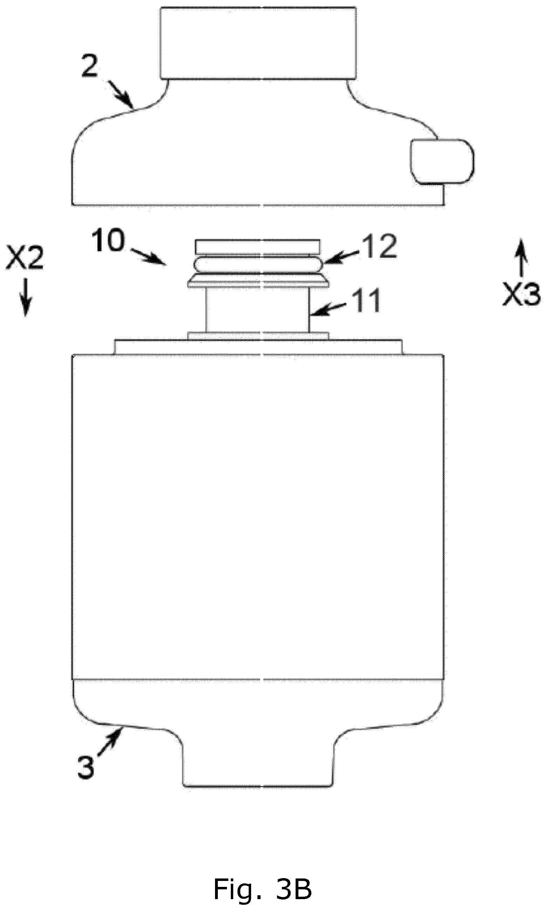

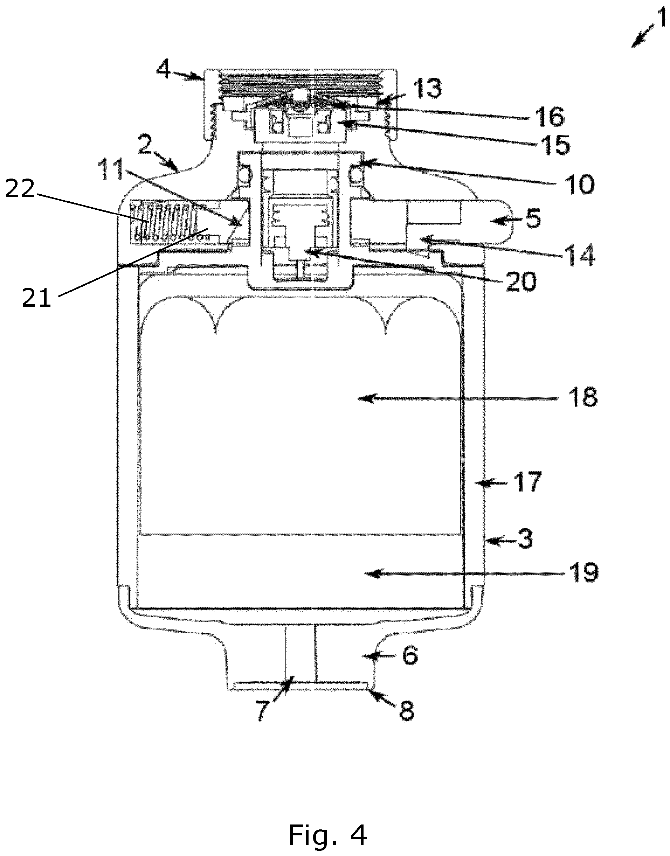

Figures 3A and 3B illustrate the principles of dismounting and mounting of a filter unit 3 in the connector unit 2. In figure 3A, the sanitary filter device 1 is assembled and the filter unit 3 is mounted in the connector unit 2. When the filter unit 3 is to be dismounted from the connector unit 2, e.g., for replacement, the button 5 in the connector unit is pushed as indicated by arrow X1. This will affect the coupling 14 (see Figure 4) in the connector unit 2 and release the filter unit 3 from the connector unit 2 as illustrated in figure 3B and indicated by arrow X2.

As seen in figure 3B, the upper end of the filter device 3 comprises a connector portion 10 for connection with the connector unit 2. The connector portion 10 has a recess 11 for engagement with the coupling 14 (see Figure 4) in the connector unit 2. The connector portion also comprises a packing 12, in the illustrated embodiment a packing in the form of an O-ring 12.

In case the filter unit 3 is to be mounted in the connector unit 2, the filter unit 3 is moved upwards as indicated by arrow X3 in figure 3B. When the filter unit 3 is in contact with the connector unit 2, the filter unit is pressed into the connector until proper engagement and attachment is achieved. The coupling in the connector unit may emit a sound, such as a "click" when attachment of the filter unit 3 via the connector portion 10 to the connector unit 2 is achieved. The button 5 move physically out indicating a proper lock is achieved.

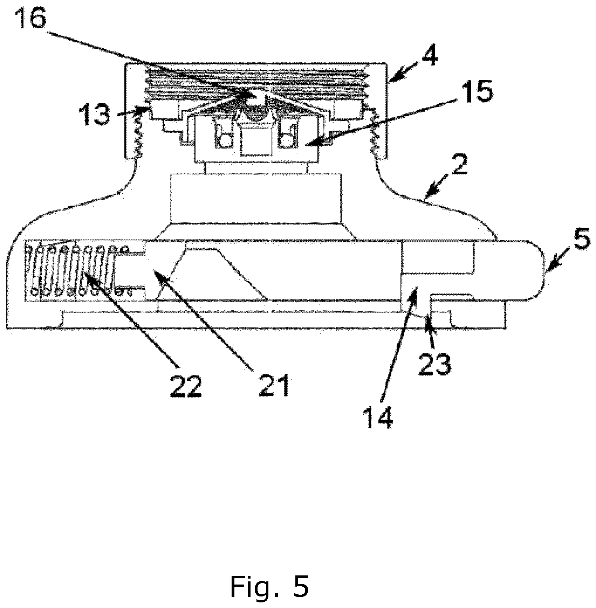

Figure 4 is a cross-section of the filter device 1. The connector unit 2 includes the coupling nut 4, which is threaded such that it can be screwed onto a tap (not shown), such that the packing 13 will form a tight connection. The connector unit also includes the coupling 14 including a pawl 21 (see also Figure 5) which can engage with the recess 11 in the connector portion 10 of the filter unit 3. The coupling 14 in this embodiment includes a spring 22 (see also Figure 5) and is activated to release the filter unit 3 by pushing the button 5.

In the illustrated embodiment, the connector unit 2 further includes a flow regulator 15 and a sieve 16 for retaining larger particles which may be present in the water from the water tap.

The filter unit 3 includes a housing 17, which encapsulates the filter portion 18. The filter portion 18 is manufactured from known filter materials, such as poly-sulfone hollow fibres. At the bottom of the filter portion 18 is located a stop layer 19, serving to retain the filter portion in the housing 17. The stop layer 19 in the illustrated embodiment, consist of a polymer material which retain the filter material while allowing filtered water to pass.

The housing 17 comprises the outlet portion 6 with the opening for filtered water 7 and the protrusion 8 forming a protective ring around the opening for filtered water 7. In the illustrated embodiment, the outlet portion 6 is integrated with and welded to the housing 17 thereby encapsulating the filter portion 18.

In the illustrated embodiment of the filter unit 3, the connector portion 10 includes a check-valve 20 which serves to prevent undesired backflow of water.

The lower part of the connector unit 2 includes the coupling 14, which comprises the button 5, the pawl 21, the spring 22, and a restriction device 23 which may limit movement of the coupling 14. In this embodiment of the coupling 14, the release function (to release the filter unit) is activated by pushing the button 5, and this will via non-shown connections affect the pawl 21 to move backwards and compress the spring 22. In this manner, the pawl is removed from the recess 11 in the connector portion 10 of the filter unit 2. When the button 5 is no longer pushed, the spring 22 will push the pawl 21 and button 5 back to the initial position where the pawl 21 retains the connector portion 10 and the filter unit 3 in the connector unit 2.

The upper and lower part are defined in respect to the tap position. Thus, the upper part is closer to the water outlet of the tap than the lower part.

When a filter unit 3 is to be mounted in the connector unit 2 (e.g., due to replacement), the connector portion 10 of the filter unit will engage with the inclined surface of the pawl 21 and press it back thereby compressing the spring. When the filter unit 3 is in the correct position in the connector unit 2, the pawl 21 is pressed by means of the spring 22 into the recess 11 of the connector portion 10, thereby locking the filter unit 3 in the connector unit 2. The movement of the coupling, which is a movement forwards and backwards, is limited by the restriction device 23.

Figure 5 shows a cross-section of the connector unit 2 illustrated in Figure 4 in an enlarged view. At the upper part of the connector unit 2, the coupling unit 4 for connection with a water tap is mounted and in the central upper part of the connector unit, the flow regulator 15, the sieve 16 and the gasket/packing 13 are mounted as described above.

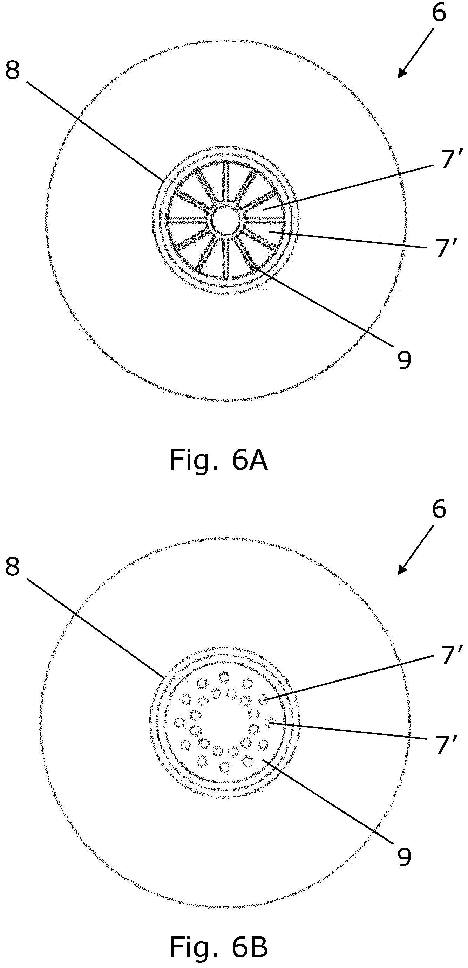

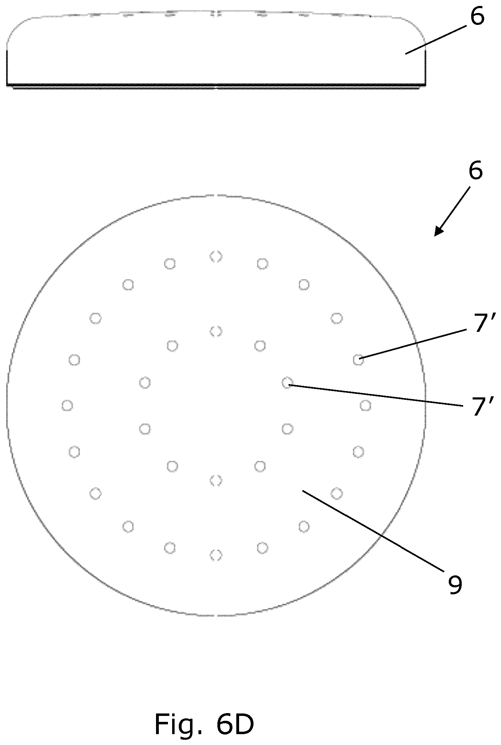

Figures 6A-E illustrate different designs of the opening 7 for filtered water in the outlet portion 6 of the filter unit 3. The designs illustrated in Figures 6A-6C are typically used at a water tap, where the designs illustrated in Figures 6D-6E are typically used at a shower.

Figure 6A illustrates an outlet portion 6 comprising a laminar outflow member 9 (mill wheel), where the opening 7 is divided into a plurality of smaller openings 7' by the outflow member 9 to provide a laminar flow of the filtered water.

Figure 6B illustrates an outlet portion 6 comprising a spray outflow member 9 where the opening 7 is divided into a plurality of smaller openings 7' in the form of substantially circular holes.

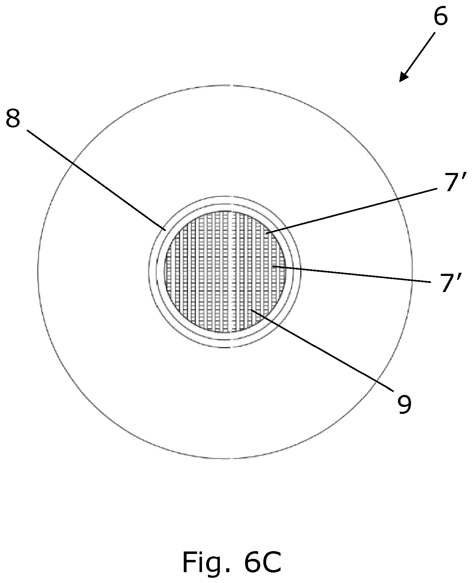

Figure 6C illustrates an outlet portion 6 comprising an outflow member 9 in the form of a mesh, where the mesh typically is made from stainless steel or copper. The mesh 9 divides the oping 7 into a plurality of smaller openings 7'.

In each of the embodiments illustrated in Figures 6A-6C, the outlet portion 6 comprises a protrusion 8 forming a protective ring around the outflow member 9. The protective ring 8 serves to prevent touching of the outflow member 9.

Figure 6D illustrates a side view (upper part of Figure 6D) and a view from below (lower part of Figure 6D) of an outlet portion 6 with an opening for filtered water, where the opening is formed by a plurality of smaller openings 7' extending over the full surface of the outlet portion.

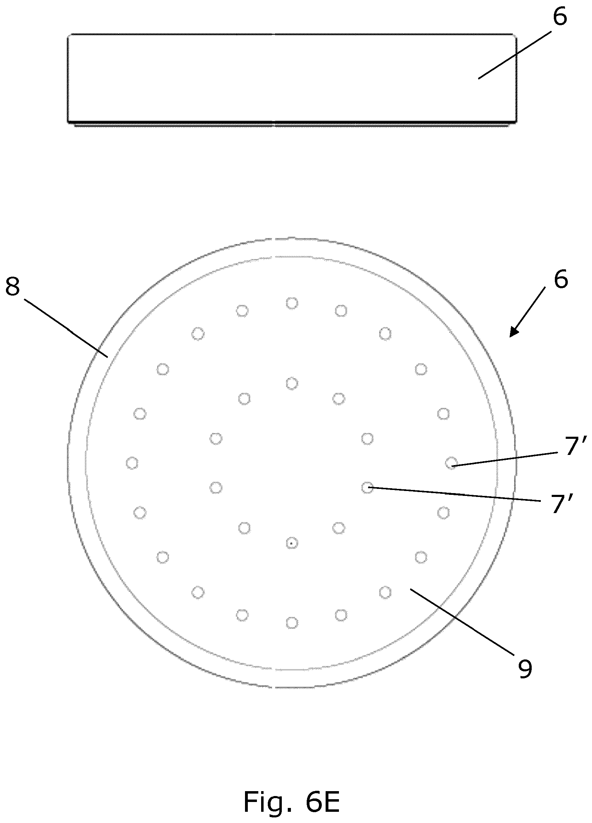

Figure 6E illustrated a similar embodiment as illustrated in Figure 6E. The embodiment in Figure 6E further comprises a protrusion 8 forming a protective ring around the smaller openings 7'.

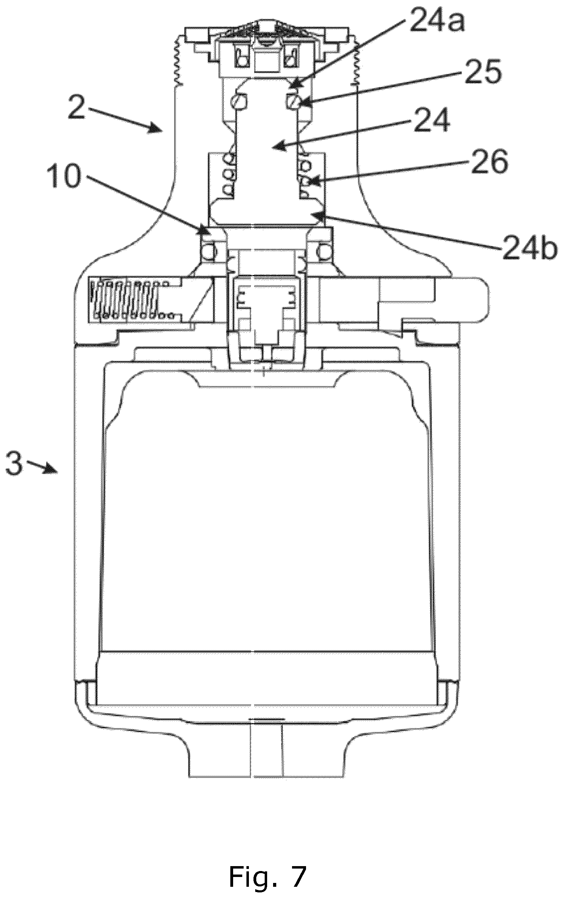

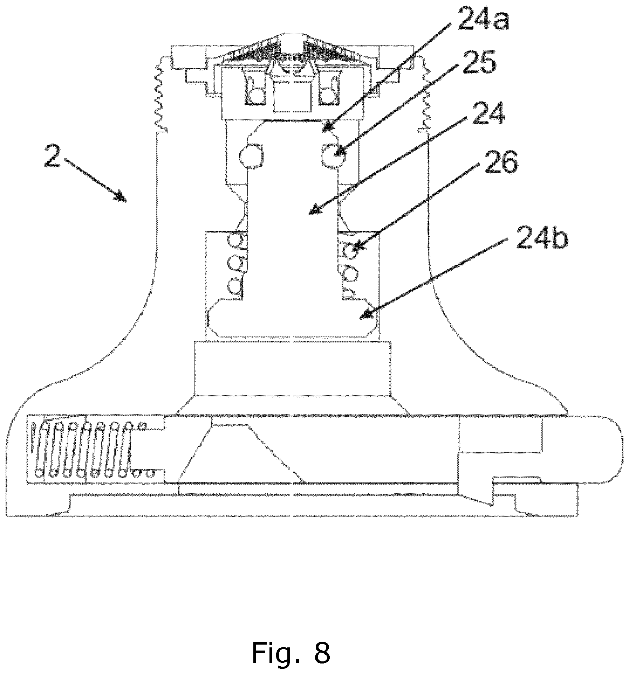

Figure 7 and 8 illustrate an embodiment, in which the connector unit 2 includes a piston 24 which has an x-shaped cross-section along a part of its length. However, the top part 24a including the O-ring 25 has a circular cross-section, such that it can close the water outlet in the connector unit when the filter unit 3 is not connected to the connector unit 2. The lower part of the piston 24 has the x-shaped or recessed cross-section which will allow easier flow of water along the piston 24 when the piston 24 is in open position.

In figure 7, the filter unit 3 is attached to the connector unit 2 via the connection portion 10. The connection portion 10 engage with the bottom part 24b of the piston 24 and pushes it upwards to an open position. When the filter unit 3 is removed from the connector unit 2t the spring 26 forces the piston 24 downwards to stop the water flow from the connector unit 2.

Figure 8 is a closer view of the connector unit 2 in figure 7.

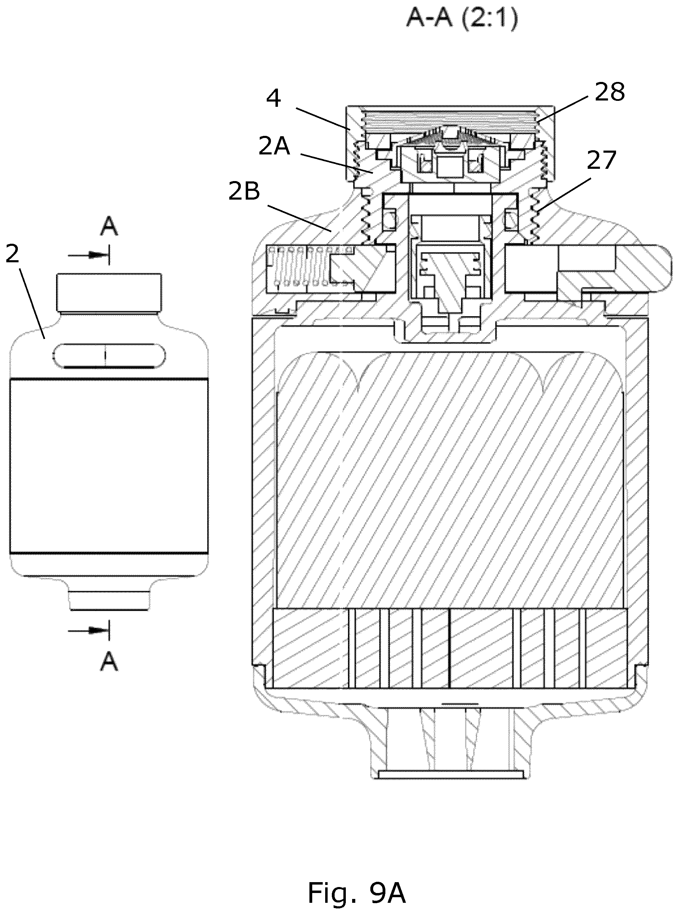

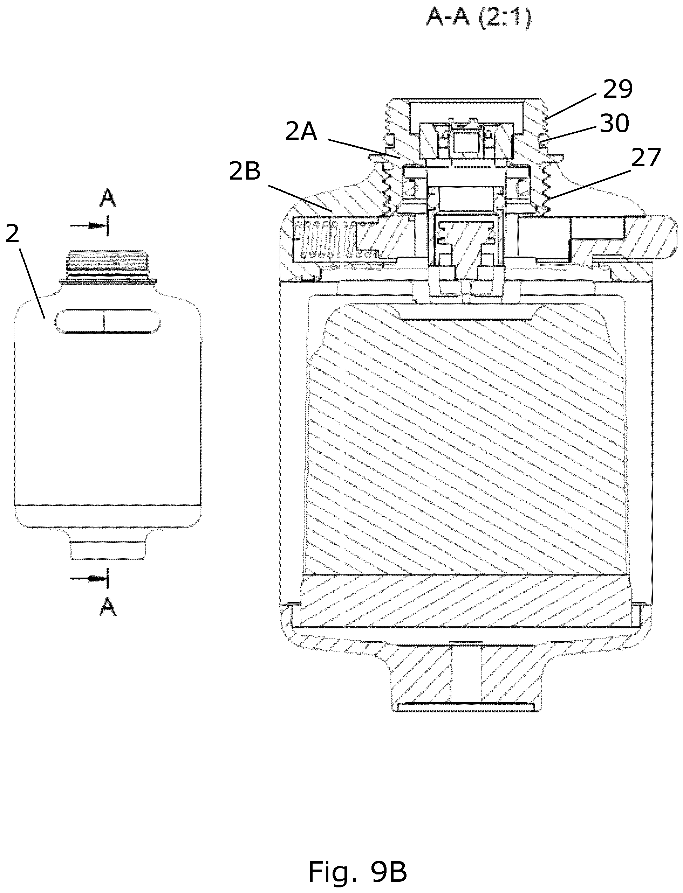

Figures 9A and 9B illustrate two different embodiments of a sanitary filter device 1. In both embodiments, the connector unit 2 is formed by two parts 2A, 2B attached to each other by concurrent threads 27. The upper part 2A may be formed of metal, such as brass, whereas the lower part 2B may be formed of a plastic material which may reduce the total weight of the filer device 1.

The embodiment illustrated in Figure 9A comprises a coupling unit 4 with an inner threading 28 for attachment to a water tap (not shown).

The embodiment illustrated in Figure 9B comprises an outer threading 29 for attachment to a water tap (not shown) and comprises an O-ring 30 for sealing between the connector unit 2 and the water tap.

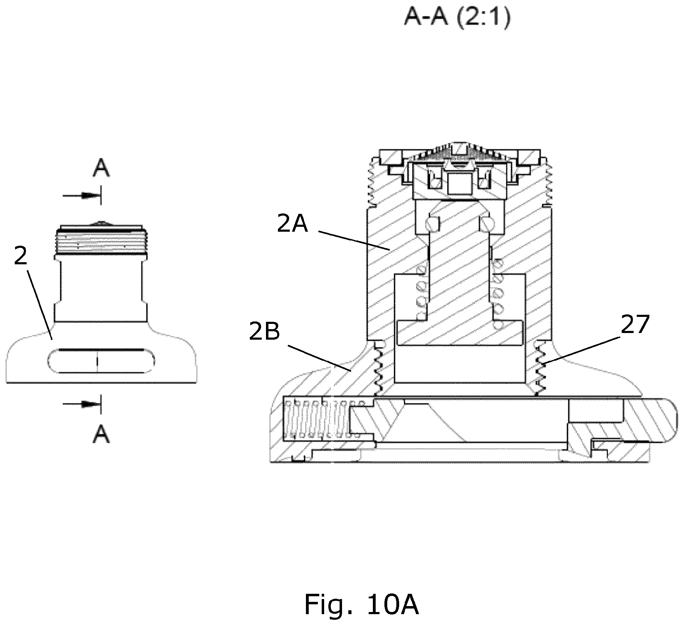

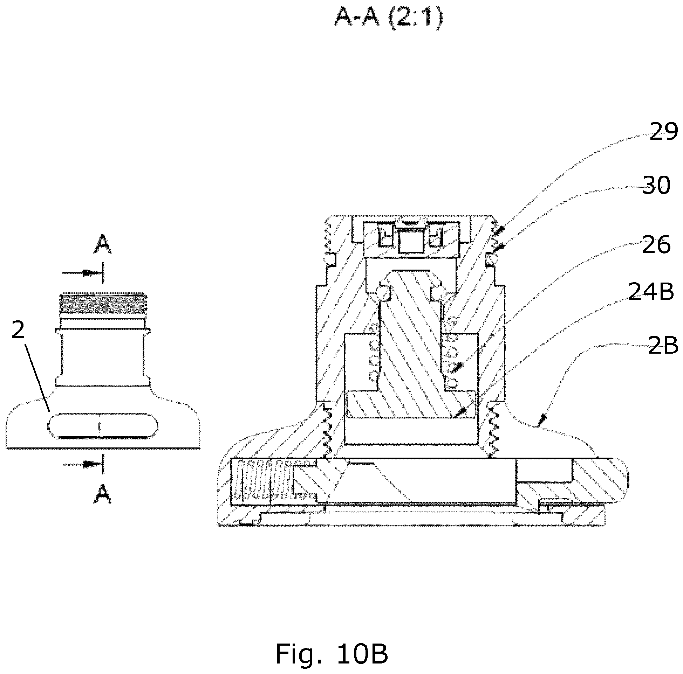

Figures 10A and 10B is a closer view of the two different connector unit 2 of Figures 9B-9B.

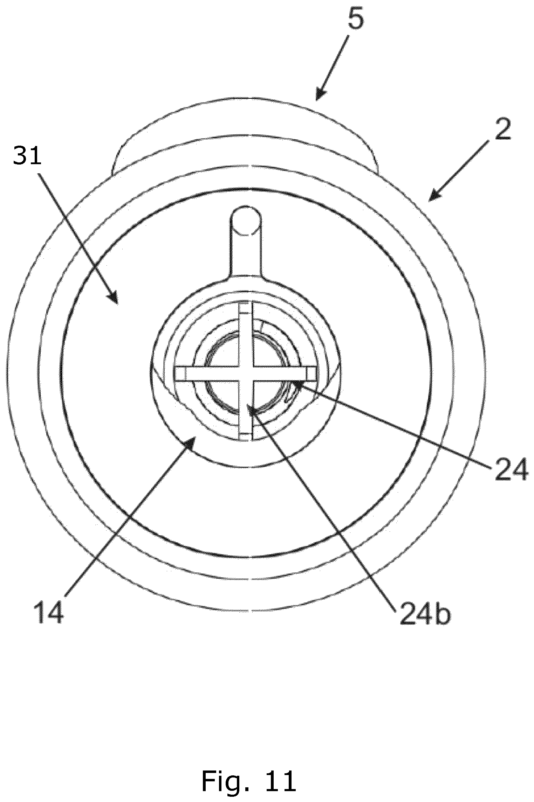

Figure 11 is a view of a connector unit 2 from the bottom when the filter unit is not attached to the connector unit 2 showing the inner orifice design 31 of the connector unit 2. Parts of the coupling 14 and button 5 can be seen. In the opening in the coupling 14 the bottom part 24b of the piston 24 can be seen. The piston 24 at this lower end has an X-shaped cross-section allowing better flow of water when the piston 24 is open.

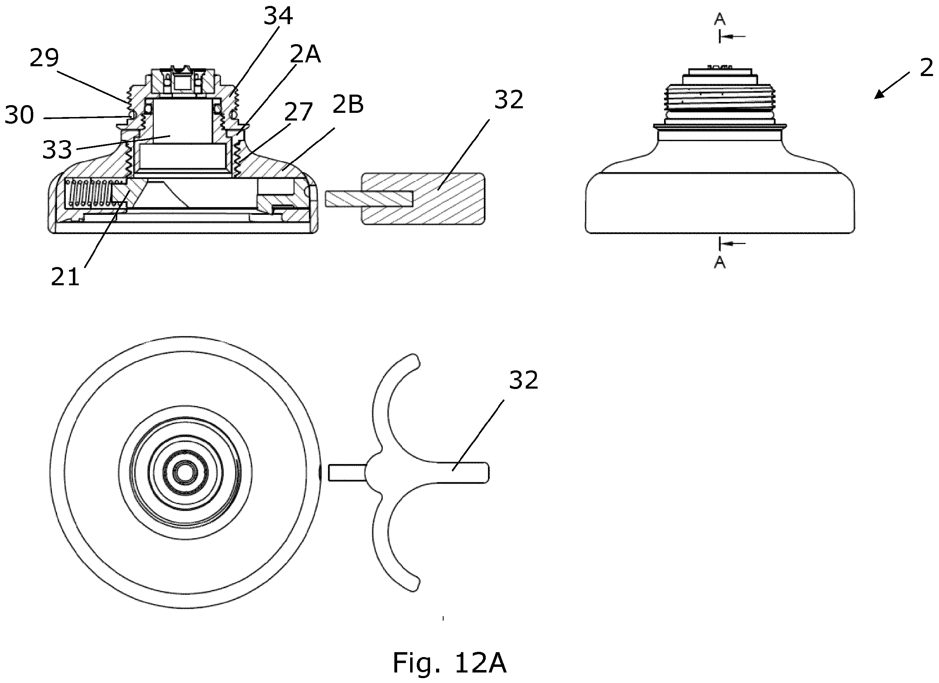

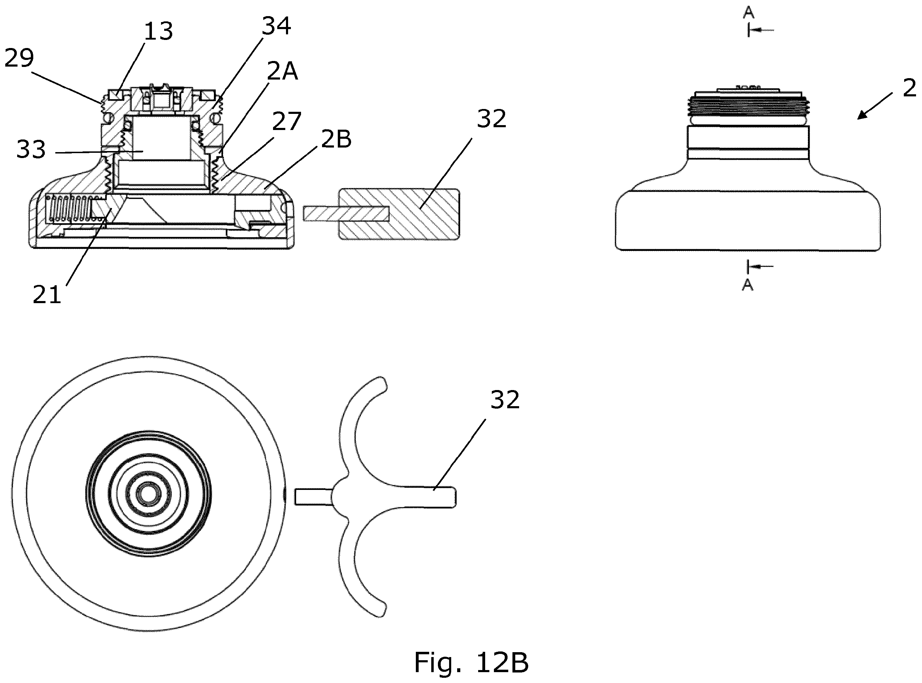

Figures 12A and 12B illustrate two different embodiments of connector unit 2 for a sanitary filter device 1. In both embodiments, the connector unit 2 is formed by two parts 2A, 2B attached to each other by concurrent threads 28. In both embodiments, the push button 5 for release of the filter unit from the connector unit 2 has been substituted by an activation tool 32 to activate the locking pawl 21 to thereby release the filter unit.

Unintentional unscrewing the connector unit 2 from a tap (not shown) is in the illustrated embodiments achieved by adding a coupler/a watertight union 33 in the connector unit 2. If a user tries to unscrew the connector unit 2 from the tap, the coupler/union 33 may ensure that the connector unit simply swivel around without allowing the user to dismount it from the tap by hand.

The two different embodiments illustrated in Figures 12A and 12B may be mounted into a water tap by means of female Hex inside using a standard Allen key. When applied with sufficient torque, it may be substantially impossible to remove the illustrated connector units 2 by hand. The connector unit 2 illustrated in Figure 12A is intended for mounting at a tap with an O-ring seal 30, whereas the connector unit 2 illustrated in Figure 12B is intended for mounting at a tap with a gasket seal 13.

In both Figure 12A and 12B, the connector unit 2 comprises a coupling element 34 with an outer threading 29 for attachment to a water tap (not shown). The coupler 33 is fixedly attached to the coupling element 34, whereby the connector unit 2 (2A+2B) can swivel around the coupler 33 without being dismounted from the water tap.

The above-described figures describe some embodiments of the disclosure, and it is clear for the skilled person that other embodiments may function as well. The connector unit may e.g., be attached to the tap by other means than a coupling nut and the coupling and/or the connector portion may be designed different than shown in the drawings.

### List of references:

- 1: filter device
- 2: connector unit
- 3: filter unit
- 4: coupling unit
- 5: button
- 6: outlet portion
- 7: opening for filtered water
- 7': smaller openings for filtered water
- 8: protrusion
- 9: outflow member
- 10: connection portion
- 11: recess
- 12: packing
- 13: packing
- 14: coupling
- 15: flow regulator
- 16: sieve
- 17: housing
- 18: filter portion
- 19: stop layer
- 20: check-valve
- 21: pawl
- 22: spring
- 23: restriction device
- 24: piston X-Shape
- 24a: top part of piston
- 24b: bottom part of piston
- 25: O-ring for piston
- 26: spring for piston
- 27: concurrent threads
- 28: inner threading
- 29: outer threading
- 30: O-ring for connector unit
- 31: inner orifice design of connector unit
- 32: activation tool
- 33: coupler/union
- 34: coupling element

## Claims

1. A sanitary filter device (1) for mounting on a water outlet, said filter device (1) comprising a connector unit (2) and a filter unit (3),
where the connector unit (2) is adapted for connection with the water outlet at a first end and connection with the filter unit (3) at a second end opposite the first end, said second end includes a coupling (14) to couple or uncouple the filter unit (3) with the connector unit (2), said coupling (14) being integrated in the connector unit (2),
and where the filter unit (3) comprises a housing (17) encapsulating an internal filter portion (18), said housing (17) includes at an upper end a connector portion (10) for connection with the connector unit(2), said connector portion (10) including an opening adapted for inlet of water to the filter portion (18), said housing (17) at a lower end opposite the upper end including an outlet portion (6) with an opening (7) for filtered water and wherein the housing (17) is sealed, such that the filter portion (18) communicates with the exterior via the opening adapted for inlet of water and the opening (7) for filtered water, and wherein a filter axis extends through the first and second end of the connector unit (2) and through the opening adapted for inlet of water and the opening (7) for filtered water.

2. The sanitary filter device (1) according to claim 1, wherein the filter unit (3) is substantially cylindrical with an upper end including the connector portion (10) and a lower end including the outlet portion (6).

3. The sanitary filter device (1) according to claim 1 or 2, wherein the housing (17) is sealed by welding and/or gluing.

4. The sanitary filter device (1) according to any one of the preceding claims, wherein the connector portion (10) comprises a recess (11) for engagement with the coupling (14).

5. The sanitary filter device (1) according to any one of the preceding claims, wherein the connector unit (2) comprises an activator linked with the coupling (14) for coupling or uncoupling the filter unit (3) with the connector unit (2).

6. The sanitary filter device (1) according to claim 5, wherein the activator comprises a button (5) for manual activation, wherein the button (5) is accessible from an outer surface of the connector unit (2).

7. The sanitary filter device (1) according to claim 5, wherein connector unit (2) comprises an activation opening from an outer surface to an inner space of the connector unit (2), and wherein the activator is arranged in the inner surface and is activatable through the activation opening.

8. The sanitary filter device (1) according to any of the preceding claims, wherein the connector unit (2) comprises a coupler (33) allowing rotational movement of the connector unit (2) relative to a water outlet, when mounted to the water tap.

9. The sanitary filter device (1) according to any one of the preceding claims, wherein the connector unit (2) includes a piston (24), such as a spring-operated piston.

10. The sanitary filter device (1) according to any one of the preceding claims, wherein the outlet portion (6) comprises a biocide.

11. The sanitary filter device (1) according to any one of the preceding claims, wherein the opening (7) for filtered water in the outlet portion (6) is encircled by a protrusion (8).

12. The sanitary filter device (1) according to any one of the preceding claims, wherein the coupling (14) for couple or uncouple the filter unit (3) with the connector unit (2) is adapted to indicate during mounting of the filter unit (3) that the filter unit (3) is proper connected with the connector unit (2).

13. The sanitary filter device (1) according to any one of the preceding claims, wherein the connector portion (10) includes a check-valve (20).

14. A sanitary installation comprising a water tap for supply of water and a sanitary filter device (1) according to any of the preceding claims, wherein the sanitary filter device (1) is mounted on a water outlet of the water tap, and wherein the opening (7) for filtered water is in constant open communication with a surrounding space.

15. A method for filtration of water by use of the sanitary installation according to claim 14, the method comprising the steps of:
- opening a flow of water,
- allowing the water to pass the filter unit (3), and
- closing the flow of water,
wherein the steps of opening and closing the flow of water is carried at the water tap, and
wherein the water flow passes the filter unit (3) after opening the water flow.

## Patentansprüche

1. Sanitärfiltervorrichtung (1) zum Anbringen an einem Wasserauslass, die Filtervorrichtung (1) aufweisend eine Verbindungseinheit (2) und eine Filtereinheit (3),
wobei die Verbindungseinheit (2) dafür eingerichtet ist, an einem ersten Ende mit dem Wasserauslass und an einem zweiten, dem ersten Ende entgegengesetzten Ende mit der Filtereinheit (3) verbunden zu werden, das zweite Ende eine Kupplung zum (14) zum Ankuppeln oder Abkuppeln der Filtereinheit (3) an oder von der Verbindungseinheit (2) aufweist, die Kupplung (14) in die Verbindungseinheit (2) integriert ist,
und wobei die Filtereinheit (3) ein Gehäuse (17) aufweist, welches einen inneren Filterabschnitt (18) umschließt, das Gehäuse (17) an einem oberen Ende einen Verbindungsabschnitt (10) zum Verbinden mit der Verbindungseinheit (2) aufweist, der Verbindungsabschnitt (10) eine Öffnung aufweist, welche für den Einlass von Wasser in den Filterabschnitt (18) eingerichtet ist, das Gehäuse (17) an einem unteren Ende, welches dem oberen Ende entgegengesetzt angeordnet ist, aufweisend einen Auslassabschnitt (6) mit einer Öffnung (7) für gefiltertes Wasser, und wobei das Gehäuse (17) derart abgedichtet ist, dass der Filterabschnitt (18) über die Öffnung, welche für den Einlass von Wasser eingerichtet ist, und die Öffnung (7) für gefiltertes Wasser mit der äußeren Umgebung kommuniziert, und wobei sich eine Filterachse durch das erste und das zweite Ende der Verbindungseinheit (2) und durch die Öffnung, welche für den Einlass von Wasser eingerichtet ist, und die Öffnung (7) für gefiltertes Wasser erstreckt.

2. Sanitärfiltervorrichtung (1) nach Anspruch 1, wobei die Filtereinheit (3) im Wesentlichen zylindrisch ist, mit einem oberen Ende, welches den Verbindungsabschnitt (10) aufweist, und einem unteren Ende, welches den Auslassabschnitt (6) aufweist.

3. Sanitärfiltervorrichtung (1) nach Anspruch 1 oder 2, wobei das Gehäuse (17) durch Schweißen und/oder Verkleben abgedichtet ist.

4. Sanitärfiltervorrichtung (1) nach einem der vorstehenden Ansprüche, wobei der Verbindungsabschnitt (10) eine Vertiefung (11) zum Eingreifen in die Kupplung (14) aufweist.

5. Sanitärfiltervorrichtung (1) nach einem der vorstehenden Ansprüche, wobei die Verbindungseinheit (2) einen Aktivator aufweist, welcher zum Ankuppeln und Abkuppeln der Filtereinheit (3) an oder von der Verbindungseinheit (2) mit der Kupplung (14) verbunden ist.

6. Sanitärfiltervorrichtung (1) nach Anspruch 5, wobei der Aktivator einen Knopf (5) zur manuellen Aktivierung aufweist, wobei der Knopf (5) von einer Außenfläche der Verbindungseinheit (2) zugänglich ist.

7. Sanitärfiltervorrichtung (1) nach Anspruch 5, wobei die Verbindungseinheit (2) eine Aktivierungsöffnung von einer Außenfläche zu einem Innenraum der Verbindungseinheit (2) aufweist, und wobei der Aktivator in der Innenfläche angeordnet und durch die Aktivierungsöffnung aktivierbar ist.

8. Sanitärfiltervorrichtung (1) nach einem der vorstehenden Ansprüche, wobei die Verbindungseinheit (2) einen Verbinder (33) aufweist, welcher eine Drehbewegung der Verbindungseinheit (2) relativ zu einem Wasserauslass ermöglicht, wenn er am Wasserhahn angebracht ist.

9. Sanitärfiltervorrichtung (1) nach einem der vorstehenden Ansprüche, wobei die Verbindungseinheit (2) einen Kolben (24), wie zum Beispiel einen federbetriebenen Kolben, aufweist.

10. Sanitärfiltervorrichtung (1) nach einem der vorstehenden Ansprüche, wobei der Auslassabschnitt (6) ein Biozid aufweist.

11. Sanitärfiltervorrichtung (1) nach einem der vorstehenden Ansprüche, wobei die Öffnung (7) für gefiltertes Wasser im Auslassabschnitt (6) einen umlaufenden Vorsprung (8) aufweist.

12. Sanitärfiltervorrichtung (1) nach einem der vorstehenden Ansprüche, wobei die Kupplung (14) zum Ankuppeln und Abkuppeln der Filtereinheit (3) an und von der Verbindungseinheit (2) dafür eingerichtet ist, während des Anbringens der Filtereinheit (3) anzuzeigen, dass die Filtereinheit (3) ordnungsgemäß mit der Verbindungseinheit (2) verbunden ist.

13. Sanitärfiltervorrichtung (1) nach einem der vorstehenden Ansprüche, wobei die Verbindungseinheit (10) ein Rückschlagventil (20) aufweist.

14. Sanitärinstallation aufweisend einen Wasserhahn für die Wasserzufuhr und eine Sanitärfiltervorrichtung (1) nach einem der vorstehenden Ansprüche, wobei die Sanitärfiltervorrichtung (1) an einem Wasserauslass des Wasserhahns angebracht ist, und wobei die Öffnung (7) für gefiltertes Wasser in ständiger offener Kommunikation mit einem umgebenden Raum steht.

15. Verfahren zum Filtern von Wasser durch die Verwendung der Sanitärinstallation nach Anspruch 14, das Verfahren umfassend die Schritte:
- Öffnen eines Wasserstroms,
- Ermöglichen, dass Wasser durch die Filtereinheit (3) fließt, und
- Schließen des Wasserstroms,
wobei die Schritte des Öffnens und des Schließens des Wasserstroms am Wasserhahn ausgeführt werden, und
wobei der Wasserstrom nach dem Öffnen des Wasserstroms durch die Filtereinheit (3) fließt.

## Revendications

1. Dispositif de filtre sanitaire (1) destiné à être monté sur une sortie d'eau, ledit dispositif de filtre (1) comprenant une unité de connecteur (2) et une unité de filtre (3), dans lequel
l'unité de connecteur (2) est adaptée pour être connectée à la sortie d'eau à une première extrémité et à l'unité de filtre (3) à une deuxième extrémité opposée à la première extrémité, ladite deuxième extrémité inclut un raccord (14) pour coupler ou découpler l'unité de filtre (3) avec l'unité de connecteur (2), ledit raccord (14) étant intégré dans l'unité de connecteur (2), et
l'unité de filtre (3) comprend un boîtier (17) encapsulant une portion filtre interne (18), ledit boîtier (17) inclut à son extrémité supérieure une portion connecteur (10) pour une connexion à l'unité de connecteur (2), ladite portion connecteur (10) incluant une ouverture adaptée pour l'entrée d'eau dans la portion filtre (18), ledit boîtier (17) incluant à son extrémité inférieure opposée à l'extrémité supérieure une portion de sortie (6) avec une ouverture (7) pour l'eau filtrée, dans lequel le boîtier (17) est étanche, de sorte que la portion filtre (18) communique avec l'extérieur via l'ouverture adaptée pour l'entrée d'eau et l'ouverture (7) pour l'eau filtrée, et dans lequel un axe de filtre s'étend à travers la première extrémité et la deuxième extrémité de l'unité de connecteur (2) et à travers l'ouverture adaptée pour l'entrée d'eau et l'ouverture (7) pour l'eau filtrée.

2. Dispositif de filtre sanitaire (1) selon la revendication 1, dans lequel l'unité de filtre (3) est substantiellement cylindrique, avec une extrémité supérieure incluant la portion connecteur (10) et une extrémité inférieure incluant la portion de sortie (6) .

3. Dispositif de filtre sanitaire (1) selon la revendication 1 ou 2, dans lequel le boîtier (17) est rendu étanche par soudage et/ou par collage.

4. Dispositif de filtre sanitaire (1) selon l'une quelconque des revendications précédentes, dans lequel la portion connecteur (10) comprend un renfoncement (11) destiné à s'engager avec le raccord (14).

5. Dispositif de filtre sanitaire (1) selon l'une quelconque des revendications précédentes, dans lequel l'unité de connecteur (2) comprend un activateur relié au raccord (14) pour coupler ou découpler l'unité de filtre (3) avec l'unité de connecteur (2).

6. Dispositif de filtre sanitaire (1) selon la revendication 5, dans lequel l'activateur comporte un bouton (5) pour une activation manuelle, dans lequel le bouton (5) est accessible depuis une surface externe de l'unité de connecteur (2).

7. Dispositif de filtre sanitaire (1) selon la revendication 5, dans lequel l'unité de connecteur (2) comprend une ouverture d'activation d'une surface externe vers un espace interne de l'unité de connecteur (2), et dans lequel l'activateur est agencé sur la surface interne et peut être actionné à travers l'ouverture d'activation.

8. Dispositif de filtre sanitaire (1) selon l'une quelconque des revendications précédentes, dans lequel l'unité de connecteur (2) comprend un coupleur (33) permettant un mouvement de rotation de l'unité de connecteur (2) par rapport à une sortie d'eau, quand elle est montée sur le robinet d'eau.

9. Dispositif de filtre sanitaire (1) selon l'une quelconque des revendications précédentes, dans lequel l'unité de connecteur (2) inclut un piston (24), tel qu'un piston à ressort.

10. Dispositif de filtre sanitaire (1) selon l'une quelconque des revendications précédentes, dans lequel la portion de sortie (6) comprend un biocide.

11. Dispositif de filtre sanitaire (1) selon l'une quelconque des revendications précédentes, dans lequel l'ouverture (7) pour l'eau filtrée dans la portion de sortie (6) est entourée d'une protubérance (8).

12. Dispositif de filtre sanitaire (1) selon l'une quelconque des revendications précédentes, dans lequel le raccord (14) pour coupler ou découpler l'unité de filtre (3) avec l'unité de connecteur (2) est adapté pour indiquer, lors du montage de l'unité de filtre (3), que l'unité de filtre (3) est correctement connectée à l'unité de connecteur (2).

13. Dispositif de filtre sanitaire (1) selon l'une quelconque des revendications précédentes, dans lequel la portion connecteur (10) inclut un clapet anti-retour (20).

14. Installation sanitaire comprenant un robinet d'eau pour fournir de l'eau et un dispositif de filtre sanitaire (1) selon l'une quelconque des revendications précédentes, dans laquelle le dispositif de filtre sanitaire (1) est monté sur une sortie d'eau du robinet d'eau, et dans laquelle l'ouverture (7) pour l'eau filtrée est constamment en communication ouverte avec l'espace environnant.

15. Procédé de filtration d'eau au moyen de l'installation sanitaire selon la revendication 14, le procédé comprenant les étapes suivantes :
- ouverture d'un flux d'eau,
- passage de l'eau à travers l'unité de filtre (3), et
- fermeture du flux d'eau,
dans lequel les étapes d'ouverture et de fermeture du flux d'eau sont mises en œuvre par le robinet d'eau, et
dans lequel le flux d'eau passe par l'unité de filtre (3) après l'ouverture du flux d'eau.
